# EUROPEAN PATENT SPECIFICATION

(11) **EP 3 121 462 B1**
(45) Date of publication and mention of the grant of the patent: **04.09.2019**
(21) Application number: 15177620.0
(22) Date of filing: 21.07.2015
(51) Int. Cl.: F16B 25/00, F16B 25/10, F16B 35/04, F16B 35/06

(54) **SCREW**
SCHRAUBE
VIS

(43) Date of publication of application: 25.01.2017
(73) Proprietor: Fushang Co., Ltd., Kaohsiung City (TW)
(72) Inventor: LIN, JUNG-NAN, Kaohsiung City (TW)
(74) Representative: Jannig, Peter

(56) References cited:
- AT-B- 379 873
- CA-A1- 2 833 847
- DE-T2- 69 527 755
- US-A- 3 903 784
- US-A1- 2011 217 145

## Description

### BACKGROUND OF THE INVENTION

The present invention relates to a screw and, more particularly, to a screw suitable for using in wood, construction materials, and similar materials.

A large amount of wood or compound wooden materials mixed and compressed from plastic resin and wood chips are used to produce wooden work-pieces for furniture, decoration and construction, and screws are often used in connection between wooden work-pieces.

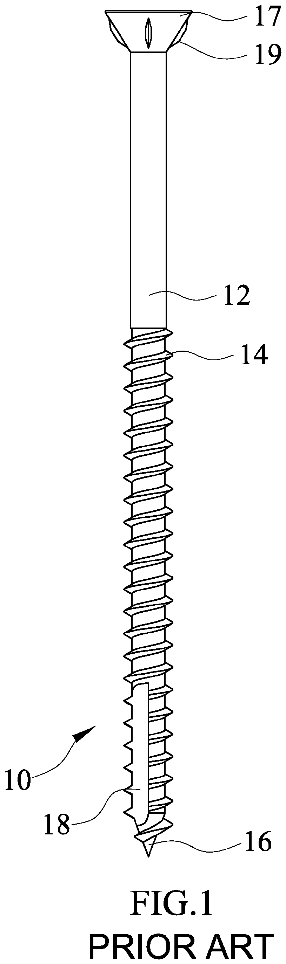

A conventional screw 10 for using with wood plank is shown in FIG. 1. The screw 10 includes a round shank 12 and a screw thread 14 disposed on the shank 12. The shank 12 includes an insertion tip 16 and a head end 17. The insertion tip 16 has an end cutting groove 18, and a plurality of ribs 19 protrudes from the head end 17. When the insertion tip 16 of the screw 10 penetrates a plank (work-piece) to be connected, the plank is cut by the end cutting groove 18 and screwed by the screw thread 14 until the head end 17 is embedded into the plank in which a drilled hole is expanded by the plurality of ribs 19.

However, the end cutting groove 18 of the screw 10 extends axially along the shank 12 which makes it difficult for wood chips produced from cutting to be expelled smoothly. Therefore, the screw 10 will be easily obstructed by the waste chips during the process of screwing into the plank, which will require more effort in operation, and the plank will easily crack because of compression. Moreover, the surface flatness of the plank is worsened because the waste chips is released from the drilled hole and left on the plank which is being penetrated by the screw 10. Furthermore, the screw thread 14 in FIG. 1 is forward screwed in the plank without anti-pull-out and anti-screw-out properties. Thus, two planks joined with the screws 10 may teeter when the screws 10 under effects of vibrations or other factors are loosened in a pull-out direction.

Documents US 3 903 784 A, US 2011/217145 A1, AT 379 873 B, DE 695 27 755 T2, and CA 2 833 847 A1 are documents reflecting the relevant background art. These documents do, however, not provide a satisfactory solution of the above mentioned problems.

### BRIEF SUMMARY OF THE INVENTION

It is an objective of the present invention to provide a screw which is applicable to a plank and in favor of surface flatness of the plank penetrated by the screw and pull-out as well as anti-screw-out properties of the screw. Moreover, the capacity of the screw to cut wood fibers and penetrate a wood plank is effectively promoted.

To achieve this and other objectives, a screw of the present invention includes a shank and a first thread. The shank includes an insertion tip, a head end spaced from the insertion tip along a longitudinal axis, and a straight portion defined between the insertion tip and the head end. The head end is greater than the straight portion in an outer diameter and includes an upper portion and a lower portion which is adjacent to the straight portion and tapered toward the straight portion. The upper portion is provided with a pointed cutting portion circumferentially designed at a bottom thereof. A plurality of anti-screw-out teeth protrude from a circumferential surface of the lower portion, and each anti-screw-out tooth includes a guide face and a stop face, wherein the guide ace of each anti-screw-out tooth extends outward from the circumferential surface in a tangential manner. An included angle between the guide face and the circumferential surface of the lower portion is between 90 and 180 degrees. A recessed channel is formed between the stop face and the circumferential surface. The first thread is spirally disposed on the straight portion of the shank and includes a plurality of asymmetrical thread convolutions. Each asymmetrical thread convolution has a first cutting face facing onto the insertion tip and a second cutting face backing onto the insertion tip. An included angle between the first cutting face and a horizontal axis perpendicular to the longitudinal axis is between 25 and 45 degrees, and an included angle between the second cutting face and the horizontal axis is between 3 and 23 degrees.

In an embodiment, the circumferential surface of the lower portion is provided with four anti-screw-out teeth spaced from one another at a constant angle. The guide face of each anti-screw-out tooth curvedly extends outward from the circumferential surface in a tangential manner. An included angle between the stop face and the circumferential surface of the lower portion is less than 90 degrees. In another embodiment, the guide face of each anti-screw-out tooth extends outward from the circumferential surface in a tangential manner, so that the lower portion has roughly square cross-sections. An included angle between the stop face and the circumferential surface of the lower portion is greater than 90 degree.

In an embodiment, the straight portion includes a lower section disposed near the insertion tip and an upper section disposed near the head end. The lower section has roughly triangular transverse cross sections, and the upper section has circular transverse cross sections.

In an embodiment, the upper portion is greater than a top end of the lower portion in an outer diameter. A slope is provided on an inner side of the cutting portion. A recess is formed between the cutting portion and the circumferential surface of the top end of the lower portion. Each anti-screw-out tooth includes an upper end extending into the recess and a lower end extending to the upper section of the straight portion. The upper end of each anti-screw-out tooth connects with the slope of the cutting portion or is adjacent to the cutting portion.

The present invention will become clearer in light of the following detailed description of illustrative embodiments of this invention described in connection with the drawings.

### DESCRIPTION OF THE DRAWINGS

FIG. 1 is a schematic view of a conventional screw.
FIG. 2 is a perspective view of a screw according to an embodiment of the present invention.
FIG. 3 is an elevational view of the screw of FIG. 2.
FIG. 4 is a sectional view taken along line 4-4 of FIG. 2.
FIG. 5 is a sectional view taken along line 5-5 of FIG. 3.
FIG. 6 is a sectional view taken along line 6-6 of FIG. 3.
FIG. 7 is a partial, enlarged view of the screw of FIG. 4.
FIG. 8 is a sectional view taken along line 8-8 of FIG. 3.
FIG. 9 is a partial, perspective view of a screw according to another embodiment of the present invention.
FIG. 10 is a sectional view similar to FIG. 6, illustrating anti-screw-out teeth of the present invention in another embodiment.
FIG. 11 is a plan view of a screw according to a further embodiment of the present invention.
FIG. 12 is a sectional view taken along line 12-12 of FIG. 11.
FIG. 13 is a perspective view of a screw according to yet another embodiment of the present invention.

### DETAILED DESCRIPTION OF THE INVENTION

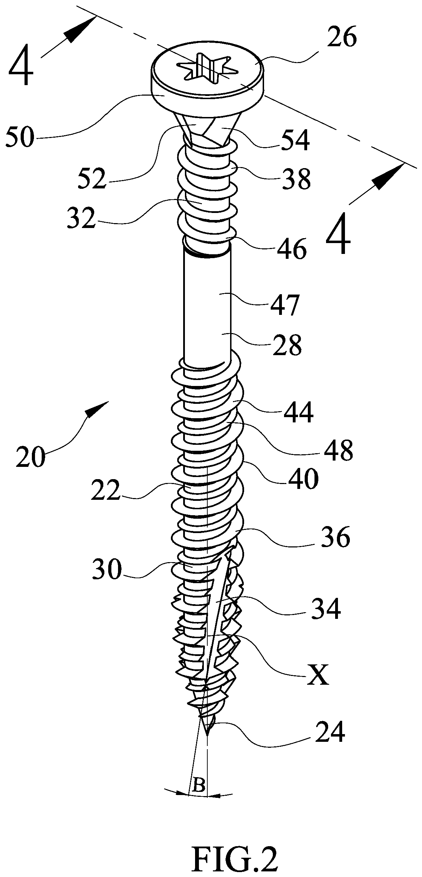

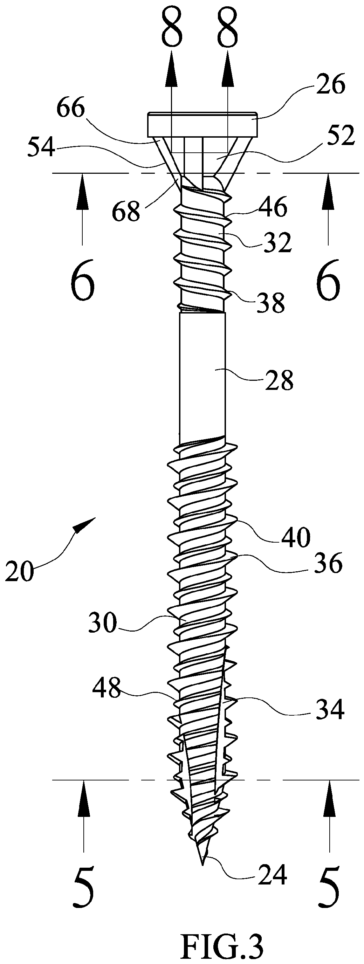

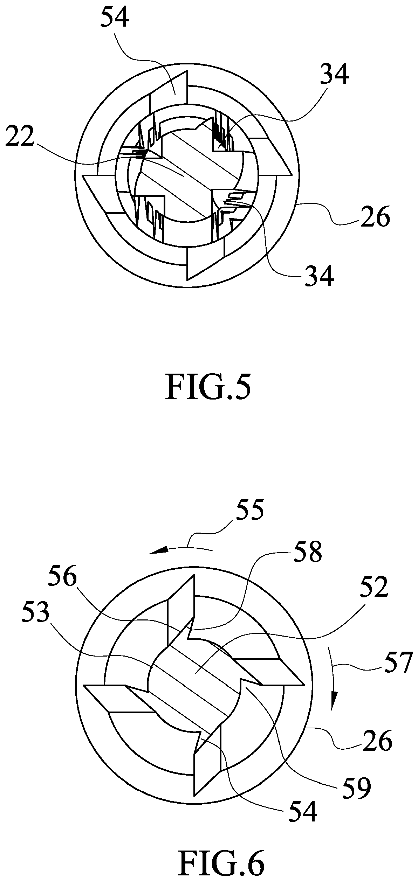

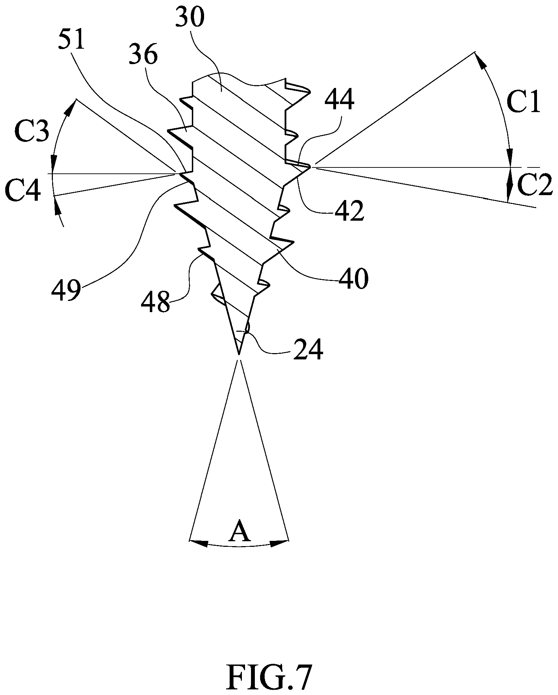

A screw 20 according to an embodiment of the present invention is shown in FIGS. 2 through 8 of the drawings and includes a shank 22 having an insertion tip 24 and a head end 26 spaced from the insertion tip 24 along a longitudinal axis (X). In this embodiment, the insertion tip 24 is formed as a drilling bit, and an included angle (A) at the insertion tip 24 is between 20 and 50 degrees (see FIG. 7) and is 30 degrees preferably. The shank 22 has a straight portion 28 with roughly the same outer diameter between the insertion tip 24 and the head end 26. The straight portion 28 includes a lower section 30 disposed near the insertion tip 24 and an upper section 32 disposed near the head end 26. The lower and upper sections 30 and 32 respectively have circular transverse cross sections. At least one end cutting groove 34 is formed in the lower section 30. In this embodiment, four end cutting grooves 34 are formed in the lower section 30, circumferentially arranged around the shank 22 and spaced from one another at a constant angle (see FIG. 5). A lower end of each end cutting groove 34 is spaced from the insertion tip 24, and an included angle (B) is formed between the extending direction of each end cutting groove 34 and the longitudinal axis (X). The included angle (B) is between 3 and 9 degrees preferably (see FIG. 2). The end cutting grooves 34 support the screw 20 to cut wood fibers effectively.

The screw 20 further includes a first thread 36 and a second thread 38. The first thread 36 is spirally formed on an outer circumference of the lower section 30 of the shank 22 and includes a plurality of asymmetrical thread convolutions 40 (see FIG. 7). Each of the thread convolutions 40 has a first cutting face 42 toward a screw-in side (facing onto the insertion tip 24) and a second cutting face 44 toward a screw-out side (backing onto the insertion tip 24). An included angle (C1) between the first cutting face 42 and a horizontal axis perpendicular to longitudinal axis (X) is 35±10 degrees (between 25 and 45 degrees) preferably and is 35±5 degrees (between 30 and 40 degrees) optimally. An included angle (C2) between the second cutting face 44 and the horizontal axis is 13±10 degrees (between 3 and 23 degrees) preferably and is 13±5 degrees (between 8 and 18 degrees) optimally. The second thread 38 is spirally formed on an outer circumference of the upper section 32 of the shank 22 and includes a plurality of thread convolutions 46. An upward spiral direction of the second thread 38 is opposite to that of the first thread 36. As shown in FIG. 2, the upward spiral direction of the first thread 36 is similar to the upward extending direction of the end cutting groove 34 (upwardly and slantingly to the upper right).

In this embodiment, a non-threaded portion 47 exists between the lower and upper sections 30 and 32 of the shank 22. The screw 20 further includes a third thread 48 spirally and circumferentially arranged on the lower section 30 of the shank 22 and spaced from the first thread 36. The third thread 48 is less than the first thread 36 in a thread height. Moreover, the third thread 48 includes a plurality of asymmetrical thread convolutions (FIG. 7), each of which has a lower cutting face 49 (facing onto the insertion tip 24) and an upper cutting face 51 (backing onto the insertion tip 24). An included angle (C3) between the lower cutting face 49 and the horizontal axis is 35±10 degrees (between 25 and 45 degrees) preferably, and is 35±5 degrees (between 30 and 40 degrees) optimally. An included angle (C4) between the upper cutting face 51 and the horizontal axis is 13±10 degrees (between 3 and 23 degrees) preferably, and is 13±5 degrees (between 8 and 18 degrees) optimally.

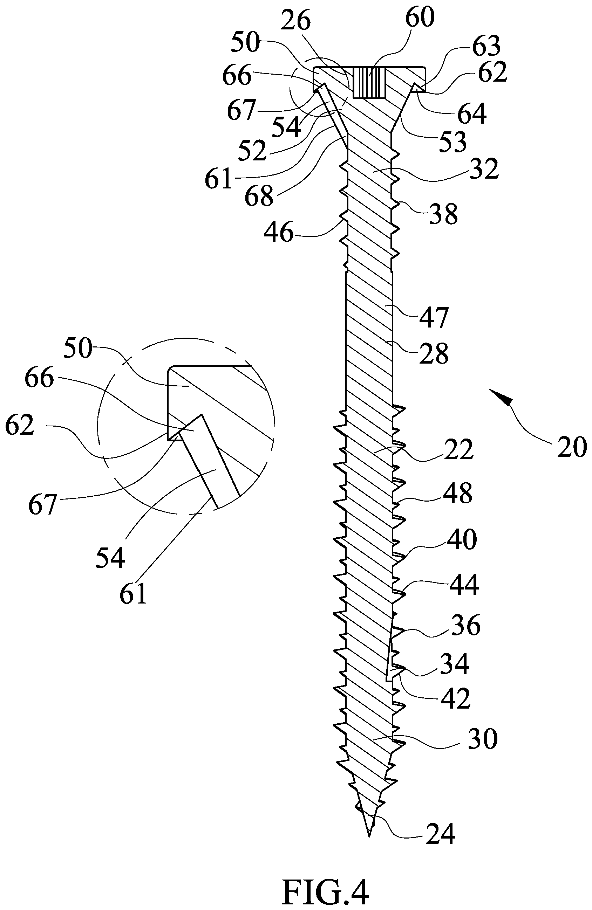

The head end 26 is greater than the straight portion 28 in an outer diameter and includes an upper portion 50 and a lower portion 52 which is adjacent to an upper end of the straight portion 28 and tapered toward the straight portion 28. A plurality of anti-screw-out teeth 54 protrude from a circumferential surface 53 of the lower portion 52 (FIG. 4). In this embodiment, the circumferential surface 53 of the lower portion 52 has circular cross-sections and is provided with four anti-screw-out teeth 54 circumferentially designed on the lower portion 52 and spaced from one another at a constant angle (FIG. 6). Each anti-screw-out tooth 54 displays a roughly triangular cross-section and includes a guide face 56 and a stop face 58, both of which intersect each other for development of a ridgeline 61.

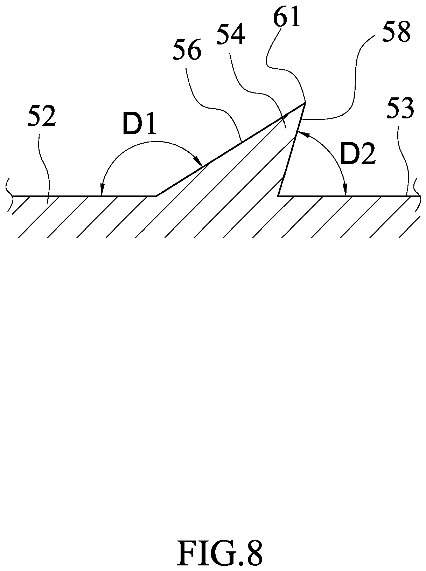

To effectively guide the screw 20 to move in a screw-in direction 55, the guide face 56 obliquely or curvedly extends outward from the circumferential surface 53 in a tangential manner. Furthermore, a recessed channel 59 is formed between the stop face 58 and the circumferential surface 53 for receiving wood chips, so that a plank can be securely fixed with the screws 20. An included angle (D1) between the guide face 56 and the circumferential surface 53 of the lower portion 52 is between 90 and 180 degrees and is between 150 and 180 degrees preferably (FIG. 8). An included angle (D2) between the stop face 58 and the circumferential surface 53 of the lower portion 52 is less than 90 degrees and between 30 and 90 degrees preferably as well as between 45 and 85 degrees optimally, enhancing resistances in a screw-out direction 57 and accommodating more wood chips inside the lower portion 52. A socket 60 is disposed in an upper surface of the upper portion 50 for a screwdriver (not shown) to insert into. At the bottom of the upper portion 50 is circumferentially designed a pointed cutting portion 62 by which wood chips or debris can be cut. In this embodiment, an outer diameter of the upper portion 50 is greater than that of a top end of the lower portion 52. A slope 63 is provided on an inner side of the cutting portion 62, and a recess 64 is formed between the cutting portion 62 and the circumferential surface 53 of the top end of the lower portion 52. The ridgeline 61 of each anti-screw-out tooth 54 extends into the recess 64. Moreover, each anti-screw-out tooth 54 includes an upper end 66 and a lower end 68 which extends to the upper section 32 of the straight portion 28. The upper end 66 of ridgeline 61 of each anti-screw-out tooth 54 connects with the slope 63 of the cutting portion 62 or is adjacent to the cutting portion 62. Furthermore, a gap 67 is formed between the upper end 66 of each anti-screw-out tooth 54 and the bottom edge of the cutting portion 62 (see FIG. 4), so that wood fibers which were stretched and pinched off by the cutting portion 62 and downward compressed by the upper portion 50 do not come out from a drilled hole for surface flatness of a plank cut by the cutting portion 62.

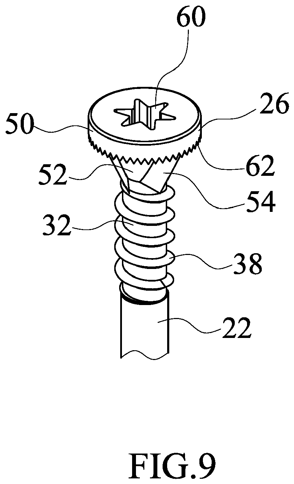

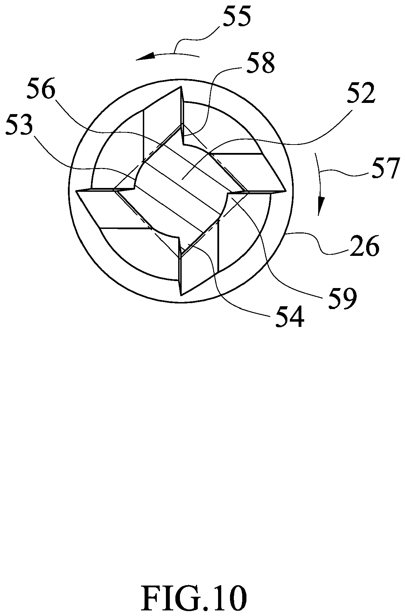

FIG. 9 illustrates the cutting portion 62 is serrated in an alternative embodiment. FIG. 10 illustrates an alternative embodiment for the anti-screw-out teeth 54, wherein the lower portion 52 displays a roughly square cross-section (indicated as phantom lines in FIG. 10) with each guide face 56 extending outwardly from the circumferential surface 53 in a tangential manner. Moreover, the stop face 58 and the circumferential surface 53 of the lower portion 52 form an included angle greater than 90 degrees. The screw 20 can be screwed into a plank (work-piece) smoothly and completely because contact surfaces between the circumferential surface 53 and the plank as well as resistances to the screw 20 in a screw-in direction are reduced by the quadrangular-cross-section lower portion 52. Furthermore, the recessed channel 59 between the stop face 58 and the curved circumferential surface 53 also enhances anti-screw-out effect.

When in use, the screw 20 is screwed into planks (not shown in figures) to be interlocked together with the insertion tip 24. Since the upward extending direction of the end cutting grooves 34 is the same as the upward spiral direction of the first thread 36 of the lower section 30, and when the insertion tip 24 of the screw 20 is screwed into the planks, the end cutting grooves 34 and the first thread 36 will cut the planks at the same time while screwing into planks, which sustains fewer resistances in the screw-in direction when debris induced is squeezed into the end cutting grooves 34.

The screw 20 of the present disclosure features advantages as follows:
1. The screw 20 which exerts force enhanced by the first cutting faces 42 of the asymmetrical thread convolutions 40 in the screw-in direction to penetrate the plank is not pulled out easily because of supports of the second cutting faces 44. Thus, the screw 20 is able to secure the plank with bonding force and pull-out force enhanced.
2. Surface flatness of the plank is promoted because wood chips or debris on a plank is cut by the cutting portion 62 of the head end 26 for trimming an opening of a drilled hole.
3. The head end 26 which is directed by the guide faces 56 of the anti-screw-out teeth 54 with the screw 20 penetrating the plank can be completely embedded into the plank. In addition, the screw 20 will not be loosened or pulled out from the plank because the stop faces 58 of the anti-screw-out teeth 54 contact the plank.
4. The capacity of the screw 20 to cut wood fibers is effectively enhanced by the end cutting grooves 34 circumferentially incised on the shank 22 and spaced from one another at a constant angle.

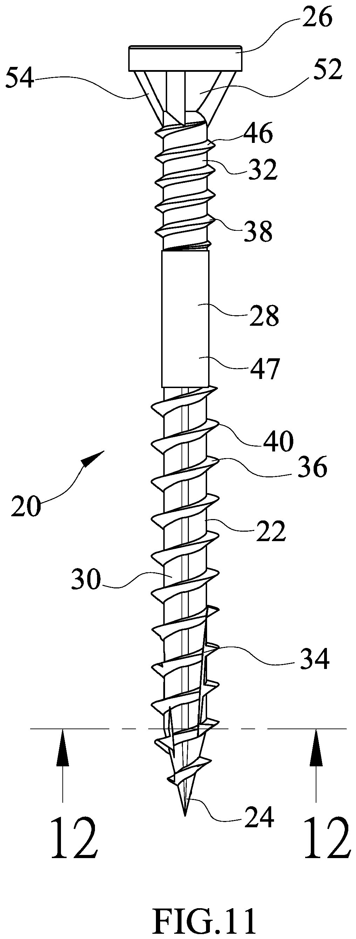

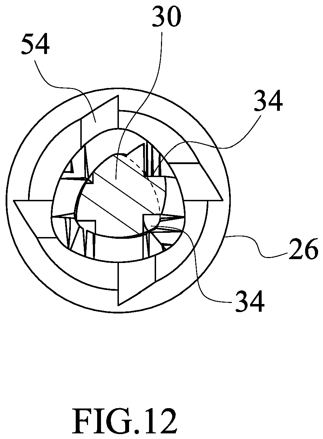

FIGS. 11 and 12 illustrate a screw 20 in another embodiment. In this embodiment, the lower section 30 has roughly triangular cross-sections, and the upper section 32 has roughly circular cross-sections. Moreover, the second thread 38 is identical to the first thread 36 in the upward-spin direction. Resistances to the screw 20 in the screw-in direction are decreased because the triangular-cross-sections of the lower section 30 are in favor of discharge of debris from the plank. The first and second threads 36 and 38 are designed as forward-direction threads, enhancing guiding effect. As such, the screw 20 in this embodiment is applicable to a rigid (high-density) plank to be connected.

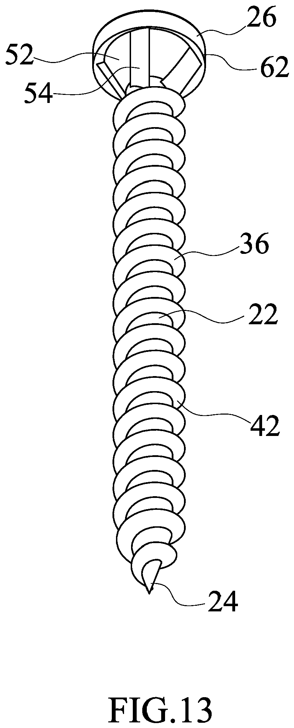

FIG. 13 illustrates a screw 20 in a further embodiment. In this embodiment, the first thread 36 rather than the second thread 38 is designed on the shank 22 and no non-threaded portion exists between the lower section 30 and the upper section 32.

The scope of the invention is to be indicated by the appended claims, and all changes which come within the meaning and range of equivalency of the claims are intended to be embraced therein.

## Claims

1. A screw comprising:
a shank (22) including an insertion tip (24) and a head end (26) spaced from the insertion tip (24) along a longitudinal axis (X), with the shank (22) further including a straight portion (28) between the insertion tip (24) and the head end (26), with the head end (26) being greater than the straight portion (28) in an outer diameter and including an upper portion (50) and a lower portion (52) which is adjacent to and tapered toward the straight portion (28), with the upper portion (50) provided with a pointed cutting portion (62) circumferentially designed at a bottom thereof; and
a first thread (36) spirally disposed on the straight portion (28) of the shank (22) and including a plurality of asymmetrical thread convolutions (40), with each of the asymmetrical thread convolutions (40) having a first cutting face (42) facing onto the insertion tip (24) and a second cutting face (44) backing onto the insertion tip (24), with an included angle (C1) between the first cutting face (42) and a horizontal axis perpendicular to the longitudinal axis (X) being between 25 and 45 degrees, with an included angle (C2) between the second cutting face (44) and the horizontal axis being between 3 and 23 degrees;
**characterized in that** a plurality of anti-screw-out teeth (54) protrude from a circumferential surface (53) of the lower portion (52) and each anti-screw-out tooth (54) includes a guide face (56) and a stop face (58), wherein the guide face (56) of each anti-screw-out tooth (54) extends outward from the circumferential surface (53) in a tangential manner such that an included angle (D1) between the guide face (56) and the circumferential surface (53) of the lower portion (52) is between 90 and 180 degrees, with a recessed channel (59) formed between the stop face (58) and the circumferential surface (53) of the lower portion (52).

2. The screw according to claim 1, wherein the circumferential surface (53) of the lower portion (52) is provided with four anti-screw-out teeth (54) spaced from one another at a constant angle, with the guide face (56) of each anti-screw-out tooth (54) curvedly extending outward from the circumferential surface (53) in a tangential manner, with an included angle (D2) between the stop face (58) and the circumferential surface (53) of the lower portion (52) being less than 90 degrees.

3. The screw according to claim 2, wherein the included angle (D2) between the stop face (58) and the circumferential surface (53) of the lower portion (52) is between 45 and 85 degrees.

4. The screw according to claim 1, wherein the circumferential surface (53) of the lower portion (52) has circular cross-sections and is provided with four anti-screw-out teeth (54) spaced from one another at a constant angle, with the guide face (56) of each anti-screw-out tooth (54) extending outward from the circumferential surface (53) in a tangential manner, with the lower portion (52) having a roughly square cross-section, with an included angle (D2) between the stop face (58) and the circumferential surface (53) of the lower portion (52) being greater than 90 degrees.

5. The screw according to claim 1, wherein the straight portion (28) includes a lower section (30) disposed near the insertion tip (24) and an upper section (32) disposed near the head end (26), with at least one end cutting groove (34) disposed in the lower section (30) of the straight portion (28), wherein an included angle (B) formed between an extending direction of the end cutting groove (34) and the longitudinal axis (X) is between 3 and 9 degrees.

6. The screw according to claim 5, wherein a second thread (38) is spirally disposed on an outer circumference of the upper section (32) of the straight portion (28), with the first thread (36) spirally disposed on an outer circumference of the lower section (30) of the straight portion (28), with a third thread (48) spirally and circumferentially arranged on the lower section (30) of the straight portion (28), with the third thread (48) being less than the first thread (36) in a thread height, with the third thread (48) including a plurality of asymmetrical thread convolutions each having a lower cutting face (49) facing onto the insertion tip (24) and an upper cutting face (51) backing onto the insertion tip (24), with an included angle (C3) between the lower cutting face (49) and the horizontal axis being between 25 and 45 degrees, with an included angle (C4) between the upper cutting face (51) and the horizontal axis being between 3 and 23 degrees.

7. The screw according to claim 1, wherein the straight portion (28) includes a lower section (30) disposed near the insertion tip (24) and an upper section (32) disposed near the head end (26), with the lower section (30) having roughly triangular transverse cross sections, with the upper section (32) having circular transverse cross sections.

8. The screw according to claim 1, wherein an outer diameter of the upper portion (50) of the head end (26) is greater than an outer diameter of a top end of the lower portion (52), with a slope (63) provided on an inner side of the cutting portion (62), with a recess (64) formed between the cutting portion (62) and the circumferential surface (53) of the top end of the lower portion (52) of the head end (26).

9. The screw according to claim 8, wherein the cutting portion (62) is serrated.

10. The screw according to claim 8, wherein the straight portion (28) includes a lower section (30) disposed near the insertion tip (24) and an upper section (32) disposed near the head end (26), with each anti-screw-out tooth (54) including an upper end (66) extending into the recess (64) and a lower end (68) extending to the upper section (32) of the straight portion (28), with the upper end (66) of each anti-screw-out tooth (54) connecting with the slope (63) of the cutting portion (62) or being adjacent to the cutting portion (62).

11. The screw according to claim 10, wherein the circumferential surface (53) of the lower portion (52) is provided with four anti-screw-out teeth (54) spaced from one another at a constant angle, with at least one end cutting groove (34) disposed in the lower section (30) of the straight portion (28), wherein an included angle (B) formed between an extending direction of the end cutting groove (34) and the longitudinal axis (X) is between 3 and 9 degrees.

12. The screw according to claim 1, wherein the circumferential surface (53) of the lower portion (52) is provided with four anti-screw-out teeth (54) spaced from one another at a constant angle, with the straight portion (28) including a lower section (30) disposed near the insertion tip (24) and an upper section (32) disposed near the head end (26), with at least one end cutting groove (34) disposed in the lower section (30) of the straight portion (28), wherein an included angle (B) formed between an extending direction of the end cutting groove (34) and the longitudinal axis (X) is between 3 and 9 degrees.

13. The screw according to claim 12, wherein the lower section (30) has roughly triangular transverse cross sections, with the upper section (32) having circular transverse cross sections.

14. The screw according to claim 1, wherein the straight portion (28) includes a lower section (30) disposed near the insertion tip (24) and an upper section (32) disposed near the head end (26), with a second thread (38) spirally disposed on an outer circumference of the upper section (32) of the straight portion (28), with the first thread (36) spirally disposed on an outer circumference of the lower section (30) of the straight portion (28), with a non-threaded portion (47) formed between the lower and upper sections (30, 32) of the straight portion (28), with an upward spiral direction of the second thread (38) being opposite to that of the first thread (36).

15. The screw according to claim 14, wherein a third thread (48) is spirally and circumferentially arranged on the lower section (30) of the straight portion (28), with the third thread (48) including a plurality of asymmetrical thread convolutions each having a lower cutting face (49) facing onto the insertion tip (24) and an upper cutting face (51) backing onto the insertion tip (24), with an included angle (C3) between the lower cutting face (49) and the horizontal axis being between 25 and 45 degrees, with an included angle (C4) between the upper cutting face (51) and the horizontal axis being between 3 and 23 degrees.

## Patentansprüche

1. Schraube, umfassend:
einen Schaft (22), der eine Einsetzspitze (24) und ein Kopfende (26) aufweist, das von der Einsetzspitze (24) entlang einer Längsachse (X) beabstandet ist, wobei der Schaft (22) ferner einen geraden Abschnitt (28) zwischen der Einsetzspitze (24) und dem Kopfende (26) aufweist, wobei das Kopfende (26) größer ist als der gerade Abschnitt (28) in einem Außendurchmesser und einen oberen Abschnitt (50) und einen unteren Abschnitt (52) aufweist, der dem geraden Abschnitt (28) benachbart ist und zu diesem hin verjüngt ist, wobei der obere Abschnitt (50) mit einem zugespitzten Schneideabschnitt (62) versehen ist, der in Umfangsrichtung an einem Boden davon ausgebildet ist; und
ein erstes Gewinde (36), das spiralförmig auf dem geraden Abschnitt (28) des Schafts (22) angeordnet ist und eine Vielzahl von asymmetrischen Gewindewindungen (40) aufweist, wobei jede der asymmetrischen Gewindewindungen (40) eine erste Schneidfläche (42), die auf die Einsetzspitze (24) weist, und eine zweite Schneidfläche (44), die nach hinten auf die Einsetzspitze (24) weist, aufweist, wobei ein eingeschlossener Winkel (C1) zwischen der ersten Schneidfläche (42) und einer horizontalen Achse rechtwinklig zur Längsachse (X) zwischen 25 und 45 Grad beträgt, wobei ein eingeschlossener Winkel (C2) zwischen der zweiten Schneidfläche (44) und der horizontalen Achse zwischen 3 und 23 Grad beträgt;
**dadurch gekennzeichnet, dass** eine Vielzahl von Aufschraubverhinderungszähnen (54) von einer Umfangsfläche (53) des unteren Abschnitts (52) absteht und jeder Aufschraubverhinderungszahn (54) eine Führungsfläche (56) und eine Stoppfläche (58) aufweist, wobei sich die Führungsfläche (56) jedes Aufschraubverhinderungszahns (54) aus der Umfangsfläche (53) in einer tangentialen Weise derart erstreckt, dass ein eingeschlossener Winkel (D1) zwischen der Führungsfläche (56) und der Umfangsfläche (53) des unteren Abschnitts (52) zwischen 90 und 180 Grad beträgt, wobei ein vertiefter Kanal (59) zwischen der Stoppfläche (58) und der Umfangsfläche (53) des unteren Abschnitts (52) gebildet ist.

2. Schraube nach Anspruch 1, wobei die Umfangsfläche (53) des unteren Abschnitts (52) mit vier Aufschraubverhinderungszähnen (54) versehen ist, die voneinander unter einem konstanten Winkel beabstandet sind, wobei sich die Führungsfläche (56) jedes Aufschraubverhinderungszahns (54) gekrümmt von der Umfangsfläche (53) nach außen in einer tangentialen Weise erstreckt, wobei ein eingeschlossener Winkel (D2) zwischen der Stoppfläche (58) und der Umfangsfläche (53) des unteren Abschnitts (52) weniger als 90 Grad beträgt.

3. Schraube nach Anspruch 2, wobei der eingeschlossene Winkel (D2) zwischen der Stoppfläche (58) und der Umfangsfläche (53) des unteren Abschnitts (52) zwischen 45 und 85 Grad beträgt.

4. Schraube nach Anspruch 1, wobei die Umfangsfläche (53) des unteren Abschnitts (52) kreisförmige Querschnitte aufweist und mit vier Aufschraubverhinderungszähnen (54) versehen ist, die voneinander unter einem konstanten Winkel beabstandet sind, wobei sich die Führungsfläche (56) jedes Aufschraubverhinderungszahns (54) von der Umfangsfläche (53) nach außen in einer tangentialen Weise erstreckt, wobei der untere Abschnitt (52) einen ungefähr quadratischen Querschnitt aufweist, wobei ein eingeschlossener Winkel (D2) zwischen der Stoppfläche (58) und der Umfangsfläche (53) des unteren Abschnitts (52) mehr als 90 Grad beträgt.

5. Schraube nach Anspruch 1, wobei der gerade Abschnitt (28) eine untere Sektion (30), die nahe bei der Einsetzspitze (24) angeordnet ist, und eine obere Sektion (32), die nahe bei dem Kopfende (26) angeordnet ist, aufweist, wobei mindestens eine Endschneiderille (34) in der unteren Sektion (30) des geraden Abschnitts (28) angeordnet ist, wobei ein eingeschlossener Winkel (B), der zwischen einer Ausdehnungsrichtung der Endschneiderille (34) und der Längsachse (X) gebildet wird, zwischen 3 und 9 Grad beträgt.

6. Schraube nach Anspruch 5, wobei ein zweites Gewinde (38) spiralförmig auf einem Außenumfang der oberen Sektion (32) des geraden Abschnitts (28) angeordnet ist, wobei das erste Gewinde (36) spiralförmig auf einem Außenumfang der unteren Sektion (30) des geraden Abschnitts (28) angeordnet ist, wobei ein drittes Gewinde (48) spiralförmig und in Umfangsrichtung auf der unteren Sektion (30) des geraden Abschnitts (28) angeordnet ist, wobei das dritte Gewinde (48) eine geringere Gewindehöhe als das erste Gewinde (36) aufweist, wobei das dritte Gewinde (48) eine Vielzahl von asymmetrischen Gewindewindungen aufweist, welche jeweils eine untere Schneidfläche (49), die auf die Einsetzspitze (24) weist, und eine obere Schneidfläche (51), die nach hinten auf die Einsetzspitze (24) weist, aufweisen, wobei ein eingeschlossener Winkel (C3) zwischen der unteren Schneidfläche (49) und der horizontalen Achse zwischen 25 und 45 Grad beträgt, wobei ein eingeschlossener Winkel (C4) zwischen der oberen Schneidfläche (51) und der horizontalen Achse zwischen 3 und 23 Grad beträgt.

7. Schraube nach Anspruch 1, wobei der gerade Abschnitt (28) eine untere Sektion (30), die nahe bei der Einsetzspitze (24) angeordnet ist, und eine obere Sektion (32), die nahe bei dem Kopfende (26) angeordnet ist, aufweist, wobei die untere Sektion (30) ungefähr dreieckige transversale Querschnitte aufweist, wobei die obere Sektion (32) kreisförmige transversale Querschnitte aufweist.

8. Schraube nach Anspruch 1, wobei ein Außendurchmesser des oberen Abschnitts (50) des Kopfendes (26) größer ist als ein Außendurchmesser eines oberen Endes des unteren Abschnitts (52), wobei eine Schräge (63) auf einer Innenseite des Schneideabschnitts (62) bereitgestellt ist, wobei eine Vertiefung (64) zwischen dem Schneideabschnitt (62) und der Umfangsfläche (53) des oberen Endes des unteren Abschnitts (52) des Kopfendes (26) gebildet ist.

9. Schraube nach Anspruch 8, wobei der Schneideabschnitt (62) gezahnt ist.

10. Schraube nach Anspruch 8, wobei der gerade Abschnitt (28) eine untere Sektion (30), die nahe bei der Einsetzspitze (24) angeordnet ist, und eine obere Sektion (32), die nahe bei dem Kopfende (26) angeordnet ist, aufweist, wobei jeder Aufschraubverhinderungszahn (54) ein oberes Ende (66), das sich in die Vertiefung (64) erstreckt, und ein unteres Ende (68), das sich in die obere Sektion (32) des geraden Abschnitts (28) erstreckt, aufweist, wobei das obere Ende (66) jedes Aufschraubverhinderungszahns (54) mit der Schräge (63) des Schneideabschnitts (62) verbunden ist oder dem Schneideabschnitt (62) benachbart ist.

11. Schraube nach Anspruch 10, wobei die Umfangsfläche (53) des unteren Abschnitts (52) mit vier Aufschraubverhinderungszähnen (54) versehen ist, die voneinander unter einem konstanten Winkel beabstandet sind, wobei mindestens eine Endschneiderille (34) in der unteren Sektion (30) des geraden Abschnitts (28) angeordnet ist, wobei ein eingeschlossener Winkel (B), der zwischen einer Ausdehnungsrichtung der Endschneiderille (34) und der Längsachse (X) gebildet wird, zwischen 3 und 9 Grad beträgt.

12. Schraube nach Anspruch 1, wobei die Umfangsfläche (53) des unteren Abschnitts (52) mit vier Aufschraubverhinderungszähnen (54) versehen ist, die voneinander unter einem konstanten Winkel beabstandet sind, wobei der gerade Abschnitt (28) eine untere Sektion (30), die nahe bei der Einsetzspitze (24) angeordnet ist, und eine obere Sektion (32), die nahe bei dem Kopfende (26) angeordnet ist, aufweist, wobei mindestens eine Endschneiderille (34) in der unteren Sektion (30) des geraden Abschnitts (28) angeordnet ist, wobei ein eingeschlossener Winkel (B), der zwischen einer Ausdehnungsrichtung der Endschneiderille (34) und der Längsachse (X) gebildet wird, zwischen 3 und 9 Grad beträgt.

13. Schraube nach Anspruch 12, wobei die untere Sektion (30) ungefähr dreieckige transversale Querschnitte aufweist, wobei die obere Sektion (32) kreisförmige transversale Querschnitte aufweist.

14. Schraube nach Anspruch 1, wobei der gerade Abschnitt (28) eine untere Sektion (30), die nahe bei der Einsetzspitze (24) angeordnet ist, und eine obere Sektion (32), die nahe bei dem Kopfende (26) angeordnet ist, aufweist, wobei ein zweites Gewinde (38) spiralförmig auf einem Außenumfang der oberen Sektion (32) des geraden Abschnitts (28) angeordnet ist, wobei das erste Gewinde (36) spiralförmig auf einem Außenumfang der unteren Sektion (30) des geraden Abschnitts (28) angeordnet ist, wobei ein gewindeloser Abschnitt (47) zwischen der unteren und oberen Sektion (30, 32) des geraden Abschnitts (28) gebildet ist, wobei eine Spiralenaufwärtsrichtung des zweiten Gewindes (38) zu jener des ersten Gewindes (36) entgegengesetzt ist.

15. Schraube nach Anspruch 14, wobei ein drittes Gewinde (48) spiralförmig und in Umfangsrichtung auf der unteren Sektion (30) des geraden Abschnitts (28) angeordnet ist, wobei das dritte Gewinde (48) eine Vielzahl von asymmetrischen Gewindewindungen aufweist, welche jeweils eine untere Schneidfläche (49), die auf die Einsetzspitze (24) weist, und eine obere Schneidfläche (51), die nach hinten auf die Einsetzspitze (24) weist, aufweisen, wobei ein eingeschlossener Winkel (C3) zwischen der unteren Schneidfläche (49) und der horizontalen Achse zwischen 25 und 45 Grad beträgt, wobei ein eingeschlossener Winkel (C4) zwischen der oberen Schneidfläche (51) und der horizontalen Achse zwischen 3 und 23 Grad beträgt.

## Revendications

1. Vis comprenant :
une tige (22) comportant une pointe d'insertion (24) et une extrémité de tête (26) espacée de la pointe d'insertion (24) le long d'un axe longitudinal (X), la tige (22) comportant en outre une portion droite (28) entre la pointe d'insertion (24) et l'extrémité de tête (26), l'extrémité de tête (26) étant plus grande que la portion droite (28) dans un diamètre extérieur et comportant une portion supérieure (50) et une portion inférieure (52) qui est adjacente à la portion droite (28) et qui est effilée vers celle-ci, la portion supérieure (50) étant pourvue d'une portion de coupe pointue (62) conçue circonférentiellement au niveau d'une partie inférieure de celle-ci ; et
un premier filetage (36) disposé en spirale sur la portion droite (28) de la tige (22) et comportant une pluralité de spires asymétriques (40), chacune des spires asymétriques (40) ayant une première face de coupe (42) faisant face vers la pointe d'insertion (24) et une deuxième face de coupe (44) faisant face à l'opposé de la pointe d'insertion (24), avec un angle inclus (C1) entre la première face de coupe (42) et un axe horizontal perpendiculaire à l'axe longitudinal (X) compris entre 25 et 45 degrés, avec un angle inclus (C2) entre la deuxième face de coupe (44) et l'axe horizontal compris entre 3 et 23 degrés ;
**caractérisée en ce qu'**une pluralité de dents anti-dévissage (54) font saillie depuis une surface circonférentielle (53) de la portion inférieure (52) et chaque dent anti-dévissage (54) comporte une face de guidage (56) et une face de butée (58), la face de guidage (56) de chaque dent anti-dévissage (54) s'étendant vers l'extérieur depuis la surface circonférentielle (53) de manière tangentielle de telle sorte qu'un angle inclus (D1) entre la face de guidage (56) et la surface circonférentielle (53) de la portion inférieure (52) soit compris entre 90 et 180 degrés, avec un canal en retrait (59) formé entre la face de butée (58) et la surface circonférentielle (53) de la portion inférieure (52).

2. Vis selon la revendication 1, dans laquelle la surface circonférentielle (53) de la portion inférieure (52) est pourvue de quatre dents anti-dévissage (54) espacées les unes des autres suivant un angle constant, la face de guidage (56) de chaque dent anti-dévissage (54) s'étendant de manière courbe vers l'extérieur depuis la surface circonférentielle (53) de manière tangentielle, avec un angle inclus (D2) entre la face de butée (58) et la surface circonférentielle (53) de la portion inférieure (52) inférieur à 90 degrés.

3. Vis selon la revendication 2, dans laquelle l'angle inclus (D2) entre la face de butée (58) et la surface circonférentielle (53) de la portion inférieure (52) est compris entre 45 et 85 degrés.

4. Vis selon la revendication 1, dans laquelle la surface circonférentielle (53) de la portion inférieure (52) présente des sections transversales circulaires et est pourvue de quatre dents anti-dévissage (54) espacées les unes des autres suivant un angle constant, la face de guidage (56) de chaque dent anti-dévissage (54) s'étendant vers l'extérieur depuis la surface circonférentielle (53) de manière tangentielle, la portion inférieure (52) ayant une section transversale approximativement carrée avec un angle inclus (D2) entre la face de butée (58) et la surface circonférentielle (53) de la portion inférieure (52) supérieur à 90 degrés.

5. Vis selon la revendication 1, dans laquelle la portion droite (28) comporte une section inférieure (30) disposée à proximité de la pointe d'insertion (24) et une section supérieure (32) disposée à proximité de l'extrémité de tête (26), avec au moins une gorge de coupe d'extrémité (34) disposée dans la section inférieure (30) de la portion droite (28), un angle inclus (B) formé entre une direction d'étendue de la gorge de coupe d'extrémité (34) et l'axe longitudinal (X) étant compris entre 3 et 9 degrés.

6. Vis selon la revendication 5, dans laquelle un deuxième filetage (38) est disposé en spirale sur une circonférence extérieure de la section supérieure (32) de la portion droite (28), le premier filetage (36) étant disposé en spirale sur une circonférence extérieure de la section inférieure (30) de la portion droite (28), un troisième filetage (48) étant disposé en spirale circonférentiellement sur la section inférieure (30) de la portion droite (28), le troisième filetage (48) étant inférieur au premier filetage (36) en termes de hauteur de filetage, le troisième filetage (48) comportant une pluralité de spires asymétriques ayant chacune une face de coupe inférieure (49) faisant face vers la pointe d'insertion (24) et une face de coupe supérieure (51) faisant face à l'opposé de la pointe d'insertion (24), avec un angle inclus (C3) entre la face de coupe inférieure (49) et l'axe horizontal compris entre 25 et 45 degrés, avec un angle inclus (C4) entre la face de coupe supérieure (51) et l'axe horizontal compris entre 3 et 23 degrés.

7. Vis selon la revendication 1, dans laquelle la portion droite (28) comporte une section inférieure (30) disposée à proximité de la pointe d'insertion (24) et une section supérieure (32) disposée à proximité de l'extrémité de tête (26), la section inférieure (30) ayant des sections transversales approximativement triangulaires, la section supérieure (32) ayant des sections transversales circulaires.

8. Vis selon la revendication 1, dans laquelle un diamètre extérieur de la portion supérieure (50) de l'extrémité de tête (26) est supérieur à un diamètre extérieur d'une extrémité supérieure de la portion inférieure (52), avec une pente (63) prévue sur un côté intérieur de la portion de coupe (62), avec un renfoncement (64) formé entre la portion de coupe (62) et la surface circonférentielle (53) de l'extrémité supérieure de la portion inférieure (52) de l'extrémité de tête (26).

9. Vis selon la revendication 8, dans laquelle la portion de coupe (62) est crénelée.

10. Vis selon la revendication 8, dans laquelle la portion droite (28) comporte une section inférieure (30) disposée à proximité de la pointe d'insertion (24) et une section supérieure (32) disposée à proximité de l'extrémité de tête (26), chaque dent anti-dévissage (54) comportant une extrémité supérieure (66) s'étendant dans le renfoncement (64) et une extrémité inférieure (68) s'étendant jusqu'à la section supérieure (32) de la portion droite (28), l'extrémité supérieure (66) de chaque dent anti-dévissage (54) étant connectée à la pente (63) de la portion de coupe (62) ou étant adjacente à la portion de coupe (62).

11. Vis selon la revendication 10, dans laquelle la surface circonférentielle (53) de la portion inférieure (52) est pourvue de quatre dents anti-dévissage (54) espacées les unes des autres suivant un angle constant, au moins une gorge de coupe d'extrémité (34) étant disposée dans la section inférieure (30) de la portion droite (28), un angle inclus (B) formé entre une direction d'étendue de la gorge de coupe d'extrémité (34) et l'axe longitudinal (X) étant compris entre 3 et 9 degrés.

12. Vis selon la revendication 1, dans laquelle la surface circonférentielle (53) de la portion inférieure (52) est pourvue de quatre dents anti-dévissage (54) espacées les unes des autres suivant un angle constant, la portion droite (28) comportant une section inférieure (30) disposée à proximité de la pointe d'insertion (24) et une section supérieure (32) disposée à proximité de l'extrémité de tête (26), avec au moins une gorge de coupe d'extrémité (34) disposée dans la section inférieure (30) de la portion droite (28), un angle inclus (B) formé entre une direction d'étendue de la gorge de coupe d'extrémité (34) et l'axe longitudinal (X) étant compris entre 3 et 9 degrés.

13. Vis selon la revendication 12, dans laquelle la section inférieure (30) présente des sections transversales approximativement triangulaires, la section supérieure (32) ayant des sections transversales circulaires.

14. Vis selon la revendication 1, dans laquelle la portion droite (28) comporte une section inférieure (30) disposée à proximité de la pointe d'insertion (24) et une section supérieure (32) disposée à proximité de l'extrémité de tête (26), un deuxième filetage (38) étant disposé en spirale sur une circonférence extérieure de la section supérieure (32) de la portion droite (28), le premier filetage (36) étant disposé en spirale sur une circonférence extérieure de la section inférieure (30) de la portion droite (28), une portion non filetée (47) étant formée entre les sections inférieure et supérieure (30, 32) de la portion droite (28), et une direction en spirale ascendante du deuxième filetage (38) étant opposée à celle du premier filetage (36).

15. Vis selon la revendication 14, dans laquelle un troisième filetage (48) est disposé en spirale et circonférentiellement sur la section inférieure (30) de la portion droite (28), le troisième filetage (48) comportant une pluralité de spires asymétriques ayant chacune une face de coupe inférieure (49) faisant face vers la pointe d'insertion (24) et une face de coupe supérieure (51) faisant face à l'opposé de la pointe d'insertion (24), un angle inclus (C3) entre la face de coupe inférieure (49) et l'axe horizontal étant compris entre 25 et 45 degrés, et un angle inclus (C4) entre la face de coupe supérieure (51) et l'axe horizontal étant compris entre 3 et 23 degrés.
